# EUROPEAN PATENT SPECIFICATION

(11) **EP 2 327 231 B1**
(45) Date of publication and mention of the grant of the patent: **09.08.2017**
(21) Application number: 09788321.9
(22) Date of filing: 16.09.2009
(51) Int. Cl.: H04Q 9/00

(54) **METHOD AND DEVICE FOR OPERATING A SYSTEM WITH DISTRIBUTED SENSORS**
VERFAHREN UND VORRICHTUNG ZUM BETREIBEN EINES SYSTEMS MIT VERTEILTEN SENSOREN
PROCÉDÉ ET DISPOSITIF POUR EXPLOITER UN SYSTÈME AVEC DES CAPTEURS DISTRIBUÉS

(30) Priority: 16.09.2008 EP 08164443
(43) Date of publication of application: 01.06.2011
(73) Proprietor: Nederlandse Organisatie voor toegepast- natuurwetenschappelijk onderzoek TNO, 2595 DA 's-Gravenhage (NL)
(72) Inventor: VAN FOEKEN, Eelke, NL-2509 JG Den Haag (NL); KESTER, Leonardus, Johannes, NL-2509 JG Den Haag (NL)
(74) Representative: V.O.
(86) International application number: PCT/NL2009/050553
(87) International publication number: WO 2010/033019

(56) References cited:
- US-A1- 2002 050 931
- PRASANNA VELAGAPUDI ET AL: "Maintaining shared belief in a large multiagent team" INFORMATION FUSION, 2007 10TH INTERNATIONAL CONFERENCE ON, IEEE, PI, 1 July 2007 (2007-07-01), pages 1-8, XP031193945 ISBN: 978-0-662-45804-3 cited in the application

## Description

### Field of the invention

The invention relates to a system with distributed sensors and a method of operating such a system, as well as to a device for use in such a system.

### Background

A plurality of distributed sensors is used when it is desirable to obtain more information about a common environment than can be obtained by means of a single sensor. One example of such a system is a tracking system that uses data from a plurality of sensors to compute the position of an object as a function of time. In this example sensors closest to the object may provide the most accurate position data, while other sensors provide less accurate position data or even no data at all. Distance measurements from sensors at different positions may be combined to compute a three dimensional position etc. In more general terms, information from any type of sensor can be used to update state variables of a model of an object.

In a simple prior art implementation of such a system all sensors are coupled to a central computer that collects data from the sensors and uses the data to update the model. This implementation has the problem that a vast communication bandwidth to the central computer may be required if there is a large number of sensors. Moreover the computation load to process data from all sensors can be excessively high. Also, such a system will fail entirely when the central computer fails.

One solution to this problem is to use a plurality of computers (also called agents in this case), each in communication with a respective subset of the sensors that is private to the agent. In this case, each agent can decide whether it will forward information to other agents or not. The agent keeps its own model, based on information derived from earlier sensor input and information that was received from other agents, and the agent evaluates the improvement of the model that is achieved by adding the information. Information that does not sufficiently improve the model is not forwarded. In the example of the tracking system, sensor data may be communicated only if it significantly improves the accuracy of the position of the object. The information is not communicated for example when the position of the object is already known with sufficient accuracy, or if the sensor is to far from the object to provide a significant increase in accuracy etc.

This type of solution is described in an article titled "Maintaining Shared Belief in a Large Multiagent Team" by Prasanna Velagapudi). Prasanna Velagapudi deals with a system wherein the agents are connected by a network with one to one connections, so that transmission of information between a first and second agent may have to pass through a series of intermediate agents.

Prasanna Velagapudi investigates various criteria for determining whether agents should forward received information to other agents. The simplest criterion is that a message with sensor data should be forwarded a limited number of times. This may be realized by including a count value in the message, each agent forwarding the message only if the count value is above zero, the agent placing a reduced count value in the message that is forwarded. A more advanced criterion is to increase this number of times that the message will be forwarded if an agent finds the sensor data to be valuable for its model. A yet more advanced criterion makes use of "objective functions" to decide whether to forward the message. The objective functions weigh value of the sensor data, in terms of reduced uncertainty, against communication cost.

This approach has the disadvantage that sensor information that is valuable to one agent may not reach that agent if another agent decides based on its own model that the information is not valuable. In other words, the agents cannot judge the value of information for another agent or the system as a whole. Another problem is that it is difficult to make consistent use of the information in the agents. Of course, consistent use could be ensured by adding a central computer, but this leads back to the problems of a central computer.

US2002/050931 discloses a distributed system with a plurality of field sensing units and a distant command post. Each field sensing unit is co-located with a sensor suite. The field sensing unit interprets sensor data and converts it to a common format, after which it performs a sensor fusion step locally relative to the sensors using the combined sensor data to enable decisions or control processes. The field sensing unit sends qualitative information resulting from its processing to the command post, forwarding only status and/or condition changes to the command post to save bandwidth. No communication or coordination between different field sensing units is described.

### Summary

Among others, it is an object to provide for a system that uses distributed sensing, wherein the communication between different devices in the system can be kept low and wherein consistency of information can be ensured.

Among others, it is an alternative object to provide for a system that uses distributed sensing, wherein higher level models can be constructed from sensor data, with limited communication between different devices in the system.

A method according to claim 1 is provided. Herein is ensured the communication between devices in a group of devices leads to the construction of a common model, with the same values of the state variables throughout the group. The devices in the group update the model in response to update information received from other devices in the group. A device does not use model update information derived from its sensor to update its own model, unless it decides to communicate the model update information to all devices in the group. The decision to use and share the update information is reached by applying an evaluation function that depends on the update information and the current model in the device. In an embodiment the evaluation function additionally depends on an evaluation parameter. In a further embodiment the evaluation parameter may indicate which state variables are needed for the intended use, or a threshold to distinguish whether the update is sufficiently important to justify communication.

In an embodiment the devices are organized in a plurality of layers. In this case information derived from the state variables in the group may be used as input to a device in a higher layer. By distinguishing inter layer communication between devices in a group within a first layer, needed to achieve a shared model in the group, and inter-layer communication information derived from the model to a higher layer, which need not include communicating all update information, the communication load can be reduced.

In a further embodiment, the first layer may comprise a plurality of groups of devices, each group with its own model, so that the models of different groups may differ. In this further embodiment the devices in the second layer may have intra layer communication between each other to form a further group, wherein further update information is communicated, to share information derived from the state variables from the different groups of devices in the first layer. In this way, a higher level common model, based on a combination of information from different groups of devices in the first layer, can be realized. In an embodiment communicated information in the second layer may be kept smaller than the communicated information needed for full model sharing in the first layer, for example by using a lower update frequency in the second layer or by limiting the amount of information that is exchanged within this layer recourses.

In an embodiment at least one of the distributed devices may communicate an evaluation parameter to the devices in the group. This at least one of the distributed devices may be a device outside the group, for example from a higher layer than the layer of the devices that contains the group, or it may be one of the devices of the group. Updates of the evaluation parameter are used to modify application of the evaluation function. Thus, the amount of communication and/or the type of update information that is communicated between the devices in the group can be influenced. This can be used for example to increase or decrease the accuracy of the model that the devices of the group will build (the amount of uncertainty that is removed), when it is detected from the model that a state is reached where more or less information is needed respectively, or when a change of intended use is indicated that requires more or less accuracy respectively. Thus for example, if a state variable of the common model represents the location of an object, the accuracy of the model may be increased if the model indicates that the object approaches an important area, indicated by the evaluation function. In another embodiment or in combination with state or user dependent changes of the evaluation parameter, the evaluation parameter may be updated dependent on measured communication load. Thus, for example, the amount of information that is communicated may be reduced when the communication load is high.

In another embodiment a direct update of a state variable, rather than sensor based information may be communicated to the devices of the group. Thus external information can be added to the common model, or the bias of a probability distribution can be changed. In a further embodiment such a direct update may be based on a model constructed in a higher level layer that combines state variable information from a plurality of groups that each have their own model.

In another embodiment, a device may buffer update information that failed to meet the update criterion, in order to retry whether it will satisfy the update criterion later. In this way, the buffered update information is kept available for use in the model, so that it can be decided to use it if a later update of the model makes the update information more valuable, and/or if later a change of a parameter of the evaluation function occurs that makes the update criterion less strict. In this way the amount of communication can be reduced, while the potential to use the information is retained.

In an embodiment a device may be part of more than one group at a time. In this case the device keeps separate state variables for the different groups, and it will decide about the transmission of the same update information separately for the different groups.

In an embodiment a system of distributed devices is provided wherein at least part of the distributed devices is each equipped with an own sensor, and each of said at least part of the devices is configured to perform updates of a state variable of a model maintained in the device in response to update information received from other devices in the group, and to
- derive update information from the own sensor of the device,
- evaluate an evaluation function that depends on the update information and the state variable in the device;
- update the state variable based on the update information only if the result of the evaluation function indicates that an update criterion is satisfied; and
- communicate the update information to other devices in the group only if the result of the evaluation function indicates that the update criterion is satisfied, and in that case to communicate the update information to all devices in the group.

### Brief description of the drawing

These and other objects and advantageous aspects will become apparent from a description of exemplary embodiments, using the following figures.
- Figure 1: shows a system with distributed devices
- Figure 2: shows a device for use in a distributed system
- Figure 3: shows a flow chart of an update process
- Figure 4: shows a layer structure of a distributed system
- Figure 5: shows a flow chart of a process to update the evaluation function

### Detailed description of exemplary embodiments

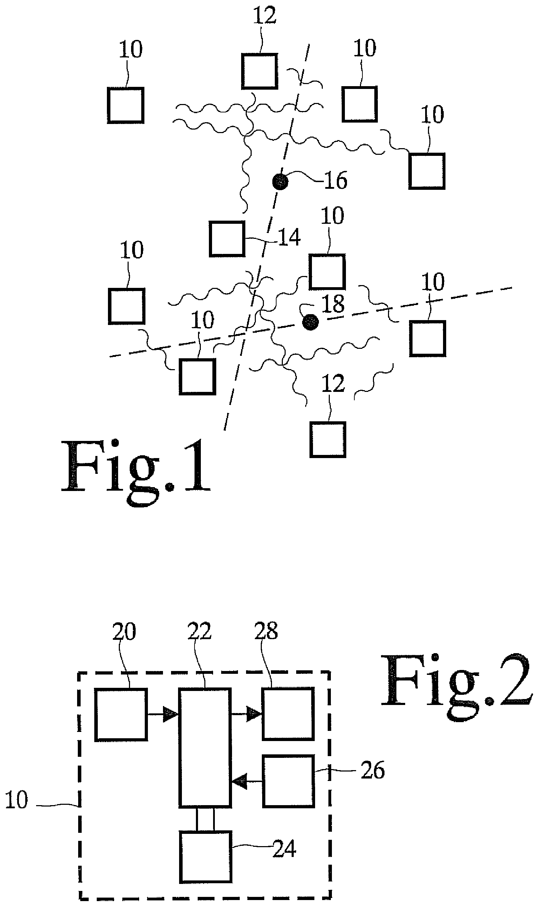

Figure 1 shows a system with distributed devices 10, 12, 14 located at different positions in an environment with one or more moving objects 16, 18. The devices comprise transmitters and receivers to communicate with each other. A first part of the devices 10 contains a sensor 10a. A second part of the devices 12 comprises information use equipment 12a, such as a display screen for displaying information to a human user, means to interact with the object 16, 18, an actuator to manipulate an object 16, 18 etc. A third part of the devices 14 contains neither sensors nor such information use equipment, but serves as intermediary between the first and second part of the devices.

Figure 2 shows an example of a device with a sensor 20, a processor 22, a memory 24, a transmitter 28 and a receiver 26. Processor 22 is coupled to sensor 20, memory 24, transmitter 28 and receiver 26. In another embodiment the device may have a plurality of sensors coupled to processor 22. In some devices no sensor may be included. In some devices information use equipment (not shown) may be included. Sensor 20 may comprise an image capture device for example, such as a CCD camera, a microphone or other sound sensor, a radiation sensor, a pulse-echo sensor, a radar or any other sensor.

Processor 22 is programmed to maintain state variables of a model in memory 24. Any type of model may be used. In a simple example of a model the state variables represent modelled trajectories of detected objects 16, 18 as a function of time and an uncertainty range for the trajectory. For example, the state variables could be a collection of triplets of x, y, z coordinates of detected objects, or series of such triplets successive time points. In addition the model may contain a state variable to indicate whether valid values of another state variable like a coordinate are available, or a time indication indicating when a state variable was last updated. The model may contain dx, dy and dz values that indicate the size of a range around the x, y, z coordinates wherein the actual position of the object is expected to lie with at least a threshold probability.

Other examples of possible model state variables are pixel values of a reconstructed image, e.g. of a target area, or voxels of a target area, size values of detected objects, values for their heading, values for their speed, values for their temperature etc with associated uncertainty ranges. In other examples the model state variables classifications of objects, assigning one of a class of possible type indications to an object, or probabilities of different type indications, and/or an uncertainty of an assigned type indication. The model may represent a single object, or a scene, optionally including a plurality of objects. In other examples the model state variables could be estimated probability values for different object states, wherein the state may include object coordinates, state variables of a time dependent trajectory etc. Model state variables may be provided for past, present and future time points, based on sensor input and predictions from sensor inputs.

In addition to maintaining model state variables, processor 22 is also programmed to evaluate information derived from sensor 20. For this purpose at least one evaluation function is defined as a function of the information from the sensor and the state variables of the model. In addition, the evaluation function may depend on evaluation parameters. Ultimately, the evaluation function provides for determination of a decision value (yes or no) to determine whether the information from the sensor is to be used for updating the common model or not.

A simple example of an evaluation function could be a function that identifies update information "to be used" if the model indicates that no valid value is available for a state variable that depends on the update information. In another example the evaluation function could identify as update information "to be used" even if there is no such state variable, but that state variable has last been updated more than a threshold time duration ago. In this case the length of the time duration may be a first criterion of the evaluation function.

Another simple example of an evaluation function could be a function that identifies information "to be used" if it reduces the uncertainty of the coordinates of a detected object for a certain time point in the model by a factor that exceeds a first threshold (which forms a first evaluation parameter), and if the uncertainty is above a second threshold (which forms a second evaluation parameter). When the model in the device provides for a prediction of coordinates, based on past measurements for example, the evaluation function may identify the information as "to be used" if it is determined that coordinates indicated by the information deviate from the prediction by more than a threshold value. If the state variables of the model, also comprise covariances in both the predicted and updated state in addition to locations, the evaluation function may use an information difference measure (like the Kullback Leibler divergence) for measuring the difference between predicted and updated state. Such an evaluation function may be used to evaluate whether this difference exceeds a threshold set for transmission. In another example an evaluation parameter may set a value of signal strength at which a potential object should be detected, in which case the evaluation may comprise determining whether the information provides sufficient signal strength to detect a new potential object.

In another example the information and the state variables may include pixel values and the evaluation function may identify the information as "to be used" if the pixel values cover an image area for which no pixel values are available, or at least not available sufficiently near the time of measurements, or if the pixel values differ sufficiently from pixel values of the model. The evaluation parameters may be set to define the meaning of "sufficient" for this evaluation. In another example the difference between entropy of aposteriori probability distributions of a state of an object obtained with and without the information could be compared with an evaluation parameter to decide whether or not to use the information.

In operation, processor 22 updates the state variables of the model dependent on selected information derived from sensor 20 and it causes transmitter 28 to transmit the selected information to a predetermined group of other devices 10. Processor 22 performs the selection of the information from sensor 20 using the evaluation function. The state variables are updated and the information is transmitted only when application of the evaluation function indicates that the information is valuable.

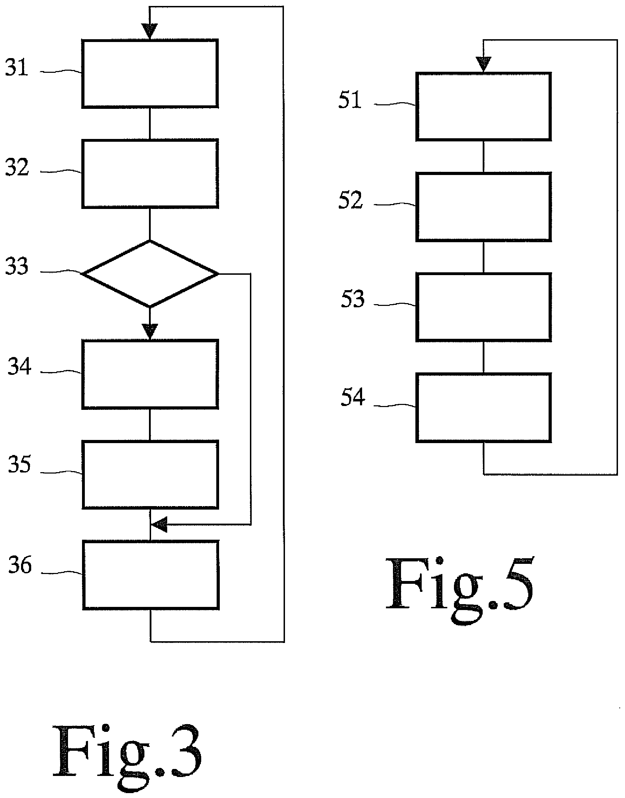

Figure 3 shows the update process. In a first step 31, processor 22 derives information from readings of sensor 20. In a second step 32, processor 22 applies the evaluation function to the derived information. In a third step 33 processor selects whether to use the information dependent on the result of the evaluation function. If the result indicates that the information must be used for an update, processor 22 executes a fourth step 34, updating the model state variables of its model in its memory 24 using the information and a fifth step 35, causing transmitter 28 to transmit the information to the other devices 10 in the group. A broadcast or multicast transmission may be used to transmit the selected information, or messages addressed to respective ones of the devices 10 in the group may be used. Wireless transmission using electromagnetic waves may be used for example, or transmission via communication lines, if available. If third step 33 indicates that the information is not to be used for an update processor skips both fourth step 34 and fifth step 35.

In a sixth step 36 processor 22 tests whether receiver 26 has received information derived from sensors of other devices 10 in the predetermined group and if so processor 22 updates the model state variables of its model in its memory 24 using the received information. Subsequently the process repeats from first step 31. It may be noted that sixth step 36 is shown as part of the process merely for the sake to example. Instead this step may be executed in a parallel process, executed concurrently with the process of first to fifth step 31-35. Sixth step 36 may involve inhibiting further updates until an older update has been applied.

All devices 10 in the predetermined group of devices use the same model. The selective transmission of information derived from sensor 20, combined with the selective update using this information ensures that the state variables of this model remain equal in each device 10 of the group, as the same updates are performed at all devices 10 in the group. In an embodiment the same evaluation function with the same evaluation parameters is used in all devices 10 of the group. This can be used to reduce communication to a minimum. However, this is not necessary to ensure that all devices have the same state variables.

In a further embodiment processor 22 may be programmed to place information derived from sensor 20 in a buffer area of memory 24 when it is not selected. In this embodiment processor 22 is configured to repeat the application of the evaluation function to information from the buffer area at a later stage, after the state variables of the model have been changed, to determine whether the information has since become selectable. If so, processor 22 uses the information to update the state variables of its model even though it was first rejected, and transmits the information. Thus for example, a sensor reading that merely confirmed a position of an object initially may be used later, if it shows that it can be used to correct the position obtained with updates using subsequent information.

In this embodiment, the evaluation function may be applied to the same information any number of times. Information may be discarded from the buffer area at any time, for example when the buffer becomes full, or after information has been buffered for a predetermined amount of time. As may be noted this means that a device 10 may store official state variables of a model plus information that may affect the state variables but that is kept for optional later use, without using it the update the state variables yet, in order to ensure consistent model state variables in a group of devices 10.

In a further embodiment, the device may be configured to combine update information derived from newly received sensor data with information from the buffer in order to form combined update information that may be transmitted instead of the information derived from the individual sensor results, when the evaluation function indicates that the combined update information is sufficiently valuable. In this way communication bandwidth can be saved when the combined information together is sufficiently valuable.

When the order of application of the updates does not affect the resulting model, the updates may be applied in any order. When the order of application does matter, and transmission is so slow that a same order is not ensured for all devices, measures may be taken to ensure that each device 10 applies the updates in the same order. The update information may be augmented with data that defines a sequence, for example by means of time stamps. In this case devices 10 may be configured to apply updates based on update information dependent on the sequence data of the update information, imposing a delay until it is ensured that information with sequence data indicating an earlier position can no longer be received. Until such time the device 10 may keep received update information in a buffer. As another alternative, the device may apply received update information sooner and keep a buffer of earlier model state values and update information. In this case, when the device receives an update with a sequence indication that is earlier than previously applied update information, the device 10 may restore the model to an earlier state that precedes the indicated position in the sequence and repeat the application of the update information in a sequence according to the sequence indication.

In another embodiment a device 10 belongs to a plurality of different groups of devices 10 at the same time. In this embodiment processor 10 keeps respective sets of state variables of models for respective different groups. When information derived from sensor 20 is available, processor 22 applies the evaluation function (or different evaluation functions) to this information in combination with state variables for the model of each group and evaluation parameters for each group separately. Subsequently, the state variables for each group individually are updated with the information or not, according to the evaluation result for the group, and the information is transmitted to the devices 10 of the corresponding group or not. In this way the same information may be used for some groups, and not for others. In an example, different groups of devices 10 may be located in respective geographical areas, with a device 10, or a part of the devices 10, in the overlap between areas. In this case a device or devices in the overlap may belong to the groups of each of the areas that overlap and this device 10 or these devices 10 may determine different state variable values for the different areas.

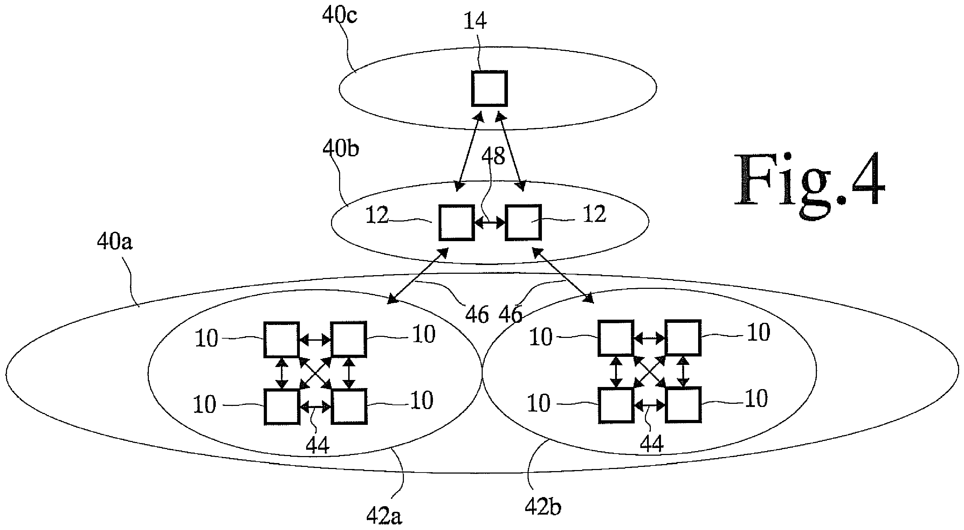

Figure 4 shows an organization of devices 10, 12, 14 into layers 40a-c. The lowest layer 40a contains devices 10 with sensors 10a. The devices 10 in this layer are organized into different groups 42a,b. Arrows indicate the communication links and directions between devices. First, arrows 44 illustrate the communication between devices 10 in the same group 42a,b, as described in the context of figure 3. Second, arrows 46 illustrate communication between devices 10, 12 in different layers 40a,b and third arrows 48 illustrate communication between devices 12 in a same layer. In the illustrated embodiment each device 12 of the one but lowest layer 40b (second layer in the following) communicates with a device 10 or devices 10 from a respective different group of devices 10 in the lowest layer 40a (first layer in the following).

It should be emphasized that the layer structure is organizational: it does not represent any spatial relationship. The layer structure is primarily used to distinguish different types of communication: intra-layer communication in a specific layer 40a-c to communicate shared updates in a group and inter-layer communication to communicate other information. Devices in one layer may be spatially located among devices in another layer or other layers. In fact, any device 10, 12, 14 may combine the functions of devices in different layers, in the sense that it performs the communication of such devices.

In an embodiment, device 10 or devices 10 from a group of devices 10 in the first layer 40a communicate information based on updates of state variables to the device 12 in the second layer 40b. In this way, different devices 12 in the second layer 40b may receive inconsistent state variables with different values, because the first layer comprises a plurality of groups. For the communication between the layers a lower update frequency may be used than in the first layer and/or the amount of information communicated about state variables between the layers may be limited to less than full information.

In this embodiment devices 12 in the second layer 40b may function as a further group that operates as described in the preceding, except that the information based on state variable updates from the group of the first layer 40a takes the place of sensor input. Thus, devices 12 in the second layer 40b may form a further common model with the same state variables in each device 12 in the second layer 40b, by selecting updates from the first layer 40a that will be shared with other devices 12 in the second layer 40b. As may be noted, this results in the construction of a common model in the second layer 40b with considerably reduced communication bandwidth demands. In an embodiment a lower update frequency may be used in the second layer than in the first layer or the amount of communicated information about state variables may be limited compared to communication in the first layer.

Different types of models may be used in different layers. For example, devices 10 in the first layer 40a may have a model with pixel values as state variables, whereas devices 12 in the second layer 40b may have coordinates of detected objects as state variables. In another example devices 10 in first layer 40a may have current coordinates of potential objects and their uncertainty range as only state variables, whereas devices 12 in second layer 40b may have more advanced object state variables, like object speed or an object trajectory and their uncertainty, for selected potential objects that have been detected with sufficient certainty.

Figure 5 shows a flow chart to illustrate an embodiment wherein devices 10, 12, 14 communicate changes of the evaluation criteria and/or state variable updates down to a group of devices 10. This may be used to adjust the amount of communication between devices. The amount of communication may be adjusted for example dependent on communication load or need for state variable updates. The device that provides the changes of the evaluation criteria and/or state variable updates may be a device 12 in the second layer 40b, or it may be a device 10 that is part of a group in the first layer 40a. An example will be described wherein the device 12 is in second layer 40b.

In a first step 51 the processor of the device 12 in second layer 40b inputs information received from a device 10 in first layer 40a based on updates of state variables. Alternatively, or in addition the processor of the device 12 in second layer 40b may input update information received from a device 14 in a higher layer 40c.

In a second step 52 the processor of the device 12 in the second layer 40b uses the received information to update state variables of its model. This may involve updates that are performed dependent on evaluation of the received information and transmission to other devices 12 in the same layer based on this evaluation, applied as described in the context of figure 3.

In a third step 53 the processor uses the updated model to determine an evaluation parameter to quantify a need for information from devices 10 in first layer 40b. For example the evaluation parameter may indicate an uncertainty level below which no updates of state variables are needed, a size of a state variable change that is considered sufficiently significant to warrant use of information for such updates, or a minimum reduction of uncertainty that is needed for an update, a minimum time distance between information that needs to be used for updating the same state variable, a minimum information difference between predicted state and updated state etc. In an embodiment, third step 53 may involve suppressing changes of the evaluation parameter if they do not exceed a predetermined threshold.

In a fourth step 54 the processor causes the transmitter of the device 12 to transmit the evaluation parameter to a group of devices 10 in the first layer 40a, if it has changed. In response to the transmission, devices 10 in the first layer 40a will use the evaluation parameter in the application of their evaluation function, thereby modifying the way in which decisions about use of information derived from the sensor are made.

In an alternative embodiment third step 53 executed by the device 12 in second layer 40b may involve a determination of updates of state variables of the model for the devices 10 in the first layer 40a and fourth step 54 may involve transmission of such updates. Thus for example, if a device 12 in second layer 40b determines that the state variables of devices 10 in a group of devices 10 in the first layer deviate from what is expected from the model of the device 12 in the second layer 40b (even after using these lower level state variables to update its own model), the device 12 in second layer 40b may decide to update the state variables in the devices 10 in the group at the first layer 40a. In an embodiment wherein a model using Bayesian probability distributions are used, this may involve changing the a priori distribution in the devices 10 in the group at the first layer 40a.

In an embodiment, the need for information from the first layer 40a may depend on the intended use of the information. For example if the intended use requires some interaction with the object if the object reaches a certain alarm state (enters a protected area for example) but no interaction if that alarm state is not reached, little information may be needed as long as the object is far from the alarm state and more information may be needed when the object approaches the alarm state. In this example, a device 12 from the second layer 40b may be used to determine a most likely state of the object in second step 52 and to change the evaluation parameter in third step 53 dependent on a measure of distance between the most likely state and the alarm state. Similarly, the need for information may depend on decisions taken at a higher level 40c, which may change the definition of the alarm state for example.

Observed communication load may be a factor in the control of changes of the evaluation parameters. Under conditions of high communication load, communication of less information may be more desirable than under conditions of low communication load. In an embodiment, the first and second step 51, 52 may be replaced by a step of monitoring communication load between devices 10 and third step 53 may comprise changing the evaluation parameter dependent on the communication load. In another embodiment the step of monitoring communication load between devices 10 may be added to first and second step 51, 52 and the result may be used to balance different needs for information about different state variables with overall communication load.

In another embodiment, the need for information from the first layer 40a may depend on the accuracy of the model in the second layer 40b. When accuracy is high the number of updates in the first layer 40a may be reduced, by raising a threshold for minimum accuracy improvements due to information derived from the sensor to allow use of that information. For example, if the position and speed of an object is accurately known in the second layer 40b, for example only position updates in the first layer 40a that deviate strongly from the expected position may be needed. This may be realized by changing state variables to add a strong bias, or changing evaluation criteria to require larger updates as a result of accepting information derived from sensor 20.

## Claims

1. A method of collecting sensor data, using a plurality of distributed devices (10), wherein at least part of the distributed devices is each equipped with a respective sensor (20), the method comprising the steps of defining a common model and an evaluation function for each device in a group (42a,b) of the devices (10), the model having at least one state variable, and the evaluation function being dependent on the at least one state variable and update information, the method comprising performing (36), in each device (10) of the group (42a,b), updates of the at least one state variable in the device (10) in response to update information received from other devices (10) in the group (42a,b), the method comprising performing, in each device of the group (42a,b) that comprises a sensor (20), the steps of
- deriving (31) update information from the sensor (20);
- applying (32) the evaluation function to the update information and the at least one state variable in the device (10);
- updating (34) the state variable based on the update information only if the application of the evaluation function indicates that an update criterion is satisfied;
- communicating (35) the update information to other devices (10) in the group (42a,b) only if the application of the evaluation function indicates that the update criterion is satisfied, and in that case communicating the update information to all devices (10) in the group (42a,b).

2. A method according to claim 1, wherein the devices (10, 12, 14) are organized in a plurality of layers (40a-c), the devices (10) of the group (42a,b) belonging to a first layer (40a), the method comprising communicating information derived from the at least one state variable from at least one of the devices (10) of the group (42a, b) to a device (12) in the second layer (40b).

3. A method according to claim 2, wherein a communication medium is used for the communication of the update information between the devices of the group, the method comprising
- measuring an amount of communication traffic in the communication medium;
- computing the evaluation parameter dependent on the measured amount of traffic.

4. A method according to claim 2, communicating
- computing an evaluation parameter based on the further update information communicated between the devices (10) of the further group (42a,b);
- communicating the evaluation parameter from at least one device (10) in the second layer (40b) to the devices (10) in at least one of the groups (42a,b) in the first layer (40a), for modifying application of the evaluation function in said at least one of the groups (42a,b).

5. A method according to claim 2, wherein the first layer (40a) comprises a plurality of groups (42a,b) of devices (10), and the second layer (40b) comprises a further group of devices (12), the method comprising
- communicating (35) the update information from the devices (10) in the groups (42a,b) only to other devices (10) in the group (42a,b) to which the devices (10) belong, if the application of the evaluation function for that group (42a,b) to the update information and the at least one state variable for that group (42a,b) indicate that the update criterion is satisfied for that group (42a,b);
- communicating information derived from the state variables from the respective groups (42a,b) each to a respective one of the devices (12) in the second layer (40b), or to a respective subset of the devices (12) in the second layer (40b),
- communicating further update information between the devices (12) in the further group, to share information derived from the state variables from the respective groups (42a,b) of devices (10) in the first layer (40a).

6. A method according to claim 5, comprising
- computing an update of the state variable and/or a further state variable of the model of at least one of the groups in at least one of the devices (12) in the further group from the further update information communicated between the devices (10) of the further group (42a,b);
- communicating the update of the state variable and/or a further state variable of the model from said at least one of the devices (12) in the further group to the devices (10) in the at least one of the groups (42a,b) in the first layer (40a);
- in response, updating the state variable and/or a further state variable in the devices (10) in the at least one of the groups (42a,b).

7. A method according to claim 1, comprising communicating an evaluation parameter, for modifying application of the evaluation function, from at least one of the distributed devices to the devices (10) in the group (42a,b).

8. A method according to claim 7, comprising
- determining state information using the at least one state variable from at least one of the devices (10) in the group (42a,b);
- selecting the evaluation parameter dependent on the state information in the device (12) in the second layer (40b).

9. A method according to claim 7, comprising
- receiving an indication of intended use of the at least one state variable;
- computing the evaluation parameter dependent on the intended use.

10. A method according to claim 1, communicating an update of the at least one state variable and/or a further state variable of the model to the devices (10) in the group (42a,b).

11. A method according to claim 1, comprising
- buffering the update information without using it to update the state variables if the application of the evaluation function indicates that the update criterion is not satisfied;
- repeating the step (32) of applying the evaluation function to the update information and the state variables in the device (10) after an update of the state variables;
- updating (34) the state variables based on the update information and communicating (35) the update information to other devices (10) in the group (42a,b), and in that case to all devices (10) of the group (42a,b) if repetition of the application of the evaluation function indicates that the update criterion is satisfied.

12. A method according to claim 1, wherein the system comprises a first and second group (42a,b), each group (42a,b) having its own evaluation function, the devices (10) in each group (42a,b) updating the state variables based on the update information and communicating the update information to all devices (10) in the group (42a,b) when the application of the evaluation function for that group (42a,b) indicates that the update criterion is satisfied, at least one of the devices (10) belonging to both the first and second group (42a,b), said at least one of the devices (10) keeping first and second state variables, for the first and second group (42a,b) respectively,
- said at least one of the devices (10) updating the state variables based on the update information and communicating the update information to all devices (10) in the first and second group (42a,b), if the application of the evaluation function to the update information and the state variables of the first and second group (42a,b) indicates that the update criterion is satisfied for the first and second group respectively.

13. A device (10) for use in a group (42a,b) of devices (10) that each keep at least one state variable of a common model, the device (10) comprising a sensor (20), a receiver (26), a transmitter (28), a memory (24) and a processor (22), the processor (22) being configured to
- update (36) of the at least one state variable in the memory in response to update information received from other devices by the receiver (26);
- derive (31) update information from the sensor (20);
- apply (32) an evaluation function to the update information and the at least one state variable in the device (10);
- update (34) the at least one state variable in the memory (24) based on the update information only if the application of the evaluation function indicates that an update criterion is satisfied;
- cause (35) the transmitter (28) to communicate the update information to other devices (10) in the group (42a,b) only if the application of the evaluation function indicates that the update criterion is satisfied and in that case to all devices (10) of the group.

14. A device according to claim 13, wherein the processor (22) is configured to cause the transmitter (28) to transmit information derived from the at least one state variable to a further device (12).

15. A device according to claim 13, wherein the processor (22) is configured to adapt an evaluation parameter based on information received by the receiver (26) and to apply the evaluation function dependent on the evaluation parameter.

## Patentansprüche

1. Verfahren zum Sammeln von Sensordaten unter Verwendung einer Vielzahl verteilter Vorrichtungen (10), wobei mindestens ein Teil der verteilten Vorrichtungen jeweils mit einem entsprechenden Sensor (20) ausgerüstet ist, welches Verfahren die Schritte umfasst, in denen ein gemeinsames Modell und eine Beurteilungsfunktion für jede Vorrichtung in einer Gruppe (42a,b) von Vorrichtungen (10) definiert werden, welches Modell mindestens eine Statusvariable hat und welche Beurteilungsfunktion von der mindestens einen Statusvariablen und Aktualisierungsinformation abhängt, das Verfahren umfassend das Durchführen (36) von Aktualisierungen der mindestens einen Statusvariablen in der Vorrichtung (10) in jeder Vorrichtung (10) der Gruppe (42a,b) als Reaktion auf Aktualisierungsinformation, empfangen von anderen Vorrichtungen (10) in der Gruppe (42a,b), das Verfahren umfassend das Durchführen in jeder Vorrichtung der Gruppe (42a,b), die einen Sensor (20) umfasst, von folgenden Schritten:
- Ableiten (31) von Aktualisierungsinformation von dem Sensor (20);
- Anwenden (32) der Beurteilungsfunktion auf die Aktualisierungsinformation und die mindestens eine Statusvariable in der Vorrichtung (10);
- Aktualisieren (34) der Statusvariablen auf der Basis der Aktualisierungsinformation nur dann, wenn die Anwendung der Beurteilungsfunktion angibt, dass ein Aktualisierungskriterium erfüllt ist;
- Kommunizieren (35) der Aktualisierungsinformation an andere Vorrichtungen (10) in der Gruppe (42a,b) nur dann, wenn die Anwendung der Beurteilungsfunktion angibt, dass das Aktualisierungskriterium erfüllt ist und in diesem Falls das Kommunizieren der Aktualisierungsinformation an alle Vorrichtungen (10) in der Gruppe (42a,b).

2. Verfahren nach Anspruch 1, wobei die Vorrichtungen (10, 12, 14) in einer Vielzahl von Schichten (40a-c) organisiert sind, welche Vorrichtungen (10) der Gruppe (42a,b) zu einer ersten Schicht (40a) gehören, das Verfahren umfassend das Kommunizieren von Information, abgeleitet von der mindestens einen Statusvariablen von mindestens einer der Vorrichtungen (10) der Gruppe (42a,b), an eine Vorrichtung (12) in der zweiten Schicht (40b).

3. Verfahren nach Anspruch 2, wobei ein Kommunikationsmedium für die Kommunikation der Aktualisierungsinformation zwischen den Vorrichtungen der Gruppe verwendet wird, das Verfahren umfassend
- das Messen einer Menge von Kommunikationsverkehr in dem Kommunikationsmedium;
- das Berechnen des Beurteilungsparameters abhängig von der gemessenen Verkehrsmenge.

4. Verfahren nach Anspruch 2, kommunizierend
- das Berechnen eines Beurteilungsparameters auf der Basis der weiteren Aktualisierungsinformation, kommuniziert zwischen den Vorrichtungen (10) der weiteren Gruppe (42a,b);
- das Kommunizieren des Beurteilungsparameters von mindestens einer Vorrichtung (10) in der zweiten Schicht (40b) an die Vorrichtungen (10) in mindestens einer der Gruppen (42a,b) in der ersten Schicht (40a) zum Ändern der Anwendung der Beurteilungsfunktion in der mindestens einen der Gruppen (42a,b).

5. Verfahren nach Anspruch 2, wobei die erste Schicht (40a) eine Vielzahl von Gruppen (42a,b) von Vorrichtungen (10) umfasst und die zweite Schicht (40b) eine weitere Gruppe von Vorrichtungen (12) umfasst, das Verfahren umfassend:
- das Kommunizieren (35) der Aktualisierungsinformation von den Vorrichtungen (10) in den Gruppen (42a,b) nur dann an andere Vorrichtungen (10) in der Gruppe (42a,b), zu denen die Vorrichtungen (10) gehören, wenn die Anwendung der Beurteilungsfunktion für diese Gruppe (42a,b) auf die Aktualisierungsinformation und die mindestens eine Statusvariable für diese Gruppe (42a,b) angeben, dass das Aktualisierungskriterium für diese Gruppe (42a,b) erfüllt ist;
- das Kommunizieren von Information, abgeleitet von den Statusvariablen von den entsprechenden Gruppen (42a,b), an jeweils eine entsprechende der Vorrichtungen (12) in der zweiten Schicht (40b) oder an einen entsprechenden Teilsatz der Vorrichtungen (12) in der zweiten Schicht (40b),
- das Kommunizieren weiterer Aktualisierungsinformation zwischen den Vorrichtungen (12) in der weiteren Gruppe, um Information, abgeleitet von den Statusvariablen von den entsprechenden Gruppen (42a,b) von Vorrichtungen (10) in der ersten Schicht (40a) zu teilen.

6. Verfahren nach Anspruch 5, umfassend
- das Berechnen einer Aktualisierung der Statusvariablen und/oder einer weiteren Statusvariablen des Modells von mindestens einer der Gruppen in mindestens einer der Vorrichtungen (12) in der weiteren Gruppen von der weiteren Aktualisierungsinformation, kommuniziert zwischen den Vorrichtungen (10) der weiteren Gruppe (42a,b);
- das Kommunizieren der Aktualisierung der Statusvariablen und/oder einer weiteren Statusvariablen des Modells von mindestens einer der Vorrichtungen (12) in der weiteren Gruppe an die Vorrichtungen (10) in der mindestens einen der Gruppen (42a,b) in der ersten Schicht (40a);
- als Antwort das Aktualisieren der Statusvariablen und/oder einer weiteren Statusvariablen in den Vorrichtungen (10) in der mindestens einen der Gruppen (42a,b).

7. Verfahren nach Anspruch 1, umfassend das Kommunizieren eines Beurteilungsparameters zum Ändern der Anwendung der Beurteilungsfunktion von mindestens einer der verteilten Vorrichtungen an die Vorrichtungen (10) in der Gruppe (42a,b).

8. Verfahren nach Anspruch 7, umfassend
- das Bestimmen von Statusinformation unter Verwendung von mindestens einer Statusvariablen von mindestens einer der Vorrichtungen (10) in der Gruppe (42a,b);
- das Auswählen des Beurteilungsparameters abhängig von der Statusinformation in der Vorrichtung (12) in der zweiten Schicht (40b).

9. Verfahren nach Anspruch 7, umfassend
- das Empfangen einer Angabe der beabsichtigten Verwendung der mindestens einen Statusvariablen;
- das Berechnen des Beurteilungsparameters abhängig von der beabsichtigten Verwendung.

10. Verfahren nach Anspruch 1, kommunizierend eine Aktualisierung der mindestens einen Statusvariablen und/oder einer weiteren Statusvariablen des Modells an die Vorrichtungen (10) in der Gruppe (42a,b).

11. Verfahren nach Anspruch 1, umfassend
- das Puffern der Aktualisierungsinformation ohne sie zur Aktualisierung der Statusvariablen zu verwenden, wenn die Anwendung der Beurteilungsfunktion angibt, dass das Aktualisierungskriterium nicht erfüllt ist;
- das Wiederholen von Schritt (32) des Anwendens der Beurteilungsfunktion auf die Aktualisierungsinformation und die Statusvariablen in der Vorrichtung (10) nach einer Aktualisierung der Statusvariablen;
- das Aktualisieren (34) der Statusvariablen auf der Basis der Aktualisierungsinformation und das Kommunizieren (35) der Aktualisierungsinformation an andere Vorrichtungen (10) in der Gruppe (42a,b) und in diesem Fall an alle Vorrichtungen (10) der Gruppe (42a,b) wenn Wiederholung der Anwendung der Beurteilung angibt, dass das Aktualisierungskriterium erfüllt ist.

12. Verfahren nach Anspruch 1, wobei das System eine erste und zweite Gruppe (42a,b) umfasst, jede Gruppe (42a,b) ihre eigene Beurteilungsfunktion hat, die Vorrichtungen (10) in jeder Gruppe (42a,b) die Statusvariablen auf der Basis der Aktualisierungsinformation aktualisieren und die Aktualisierungsinformation an alle Vorrichtungen (10) in der Gruppe (42a,b) kommunizieren, wenn die Anwendung der Beurteilungsfunktion für diese Gruppe (42a,b) angibt, dass das Aktualisierungskriterium erfüllt ist, mindestens eine der Vorrichtungen (10) zu sowohl der ersten als auch der zweiten Gruppe (42a,b) gehört, die mindestens eine der Vorrichtungen (10) die ersten und zweiten Statusvariablen für jeweils die erste und zweite Gruppe (42a,b) beibehält,
- die mindestens eine der Vorrichtungen (10) die Statusvariablen auf der Basis der Aktualisierungsinformation aktualisiert und die Aktualisierungsinformation an alle Vorrichtungen (10) in der ersten und zweiten Gruppe (42a,b) kommuniziert, wenn die Anwendung der Beurteilungsfunktion auf die Aktualisierungsinformation und die Statusvariablen der ersten und zweiten Gruppe (42a,b) angibt, dass das Aktualisierungskriterium für jeweils die erste und zweite Gruppe erfüllt ist.

13. Vorrichtung (10) zur Verwendung in einer Gruppe (42a,b) von Vorrichtungen (10), die jeweils mindestens eine Statusvariable eines gemeinsamen Modells beibehalten, welche Vorrichtung (10) einen Sensor (20), einen Empfänger (26), einen Sender (28), einen Speicher (24) und einen Prozessor (22) umfasst, welcher Prozessor (22) konfiguriert ist zum
- Aktualisieren (36) der mindestens einen Statusvariablen in dem Speicher als Reaktion auf Aktualisierungsinformation, empfangen von anderen Vorrichtungen durch den Empfänger (26);
- Ableiten (31) von Aktualisierungsinformation von dem Sensor (20);
- Anwenden (32) einer Beurteilungsfunktion auf die Aktualisierungsinformation und die mindestens eine Statusvariable in der Vorrichtung (10);
- Aktualisieren (34) der mindestens einen Statusvariablen in dem Speicher (24) auf der Basis der Aktualisierungsinformation nur dann, wenn die Anwendung der Beurteilungsfunktion angibt, dass ein Aktualisierungskriterium erfüllt ist;
- Veranlassen (35) des Senders (28), die Aktualisierungsinformation an andere Vorrichtungen (10) in der Gruppe (42a,b) nur dann zu kommunizieren, wenn die Anwendung der Beurteilungsfunktion angibt, dass das Aktualisierungskriterium erfüllt ist und in diesem Fall an alle Vorrichtungen (10) der Gruppe.

14. Vorrichtung nach Anspruch 13, wobei der Prozessor (22) konfiguriert ist, um den Sender (28) zu veranlassen, Information, abgeleitet von der mindestens einen Statusvariablen, an eine weitere Vorrichtung (12) zu übertragen.

15. Vorrichtung nach Anspruch 13, wobei der Prozessor (22) konfiguriert ist, um einen Beurteilungsparameter auf der Basis von Information, empfangen von dem Empfänger (26) anzupassen und die Beurteilungsfunktion abhängig von dem Beurteilungsparameter anzuwenden.

## Revendications

1. Méthode de collecte de données de capteurs, en utilisant une pluralité de dispositifs distribués (10), dans lequel chacun d'au moins une partie des dispositifs distribués est équipé d'un capteur respectif (20), la méthode comprenant les étapes consistant à définir un modèle commun et une fonction d'évaluation pour chaque dispositif dans un groupe (42a,b) des dispositifs (10), le modèle ayant au moins une variable d'état, et la fonction d'évaluation dépendant de la au moins une variable d'état et d'informations de mise à jour, la méthode comprenant l'exécution (36), dans chaque dispositif (10) du groupe (42a,b), de mises à jour de la au moins une variable d'état dans le dispositif (10) en réponse à des informations de mise à jour reçues d'autres dispositifs (10) dans le groupe (42a,b), la méthode comprenant l'exécution, dans chaque dispositif du groupe (42a,b) qui comprend un capteur (20), les étapes consistant à
- dériver (31) des informations de mise à jour à partir du capteur (20) ;
- appliquer (32) la fonction d'évaluation à l'information de mise à jour et la au moins une variable d'état dans le dispositif (10) ;
- mettre à jour (34) la variable d'état sur la base des informations de mise à jour uniquement si l'application de la fonction d'évaluation indique qu'un critère de mise à jour est satisfait ;
- communiquer (35) les informations de mise à jour à d'autres dispositifs (10) dans le groupe (42a,b) uniquement si l'application de la fonction d'évaluation indique que le critère de mise à jour est satisfaite, et dans ce cas, communiquer les informations de mise à jour à tous les dispositifs (10) dans le groupe (42a,b).

2. Méthode selon la revendication 1, dans lequel les dispositifs (10, 12, 14) sont organisés en une pluralité de couches (40a-c), les dispositifs (10) du groupe (42a,b) appartenant à une première couche (40a), la méthode comprenant la communication d'informations dérivées de la au moins une variable d'état à partir d'au moins l'un des dispositifs (10) du groupe (42a,b) à un dispositif (12) dans la seconde couche (40b).

3. Méthode selon la revendication 2, dans lequel un support de communication est utilisé pour la communication des informations de mise à jour entre les dispositifs du groupe, la méthode comprenant
- la mesure d'une quantité de trafic de communication dans le support de communication ;
- le calcul du paramètre d'évaluation selon la quantité de trafic mesurée.

4. Méthode selon la revendication 2, communiquant
- le calcul d'un paramètre d'évaluation sur la base des informations de mise à jour supplémentaires communiquées entre les dispositifs (10) du groupe supplémentaire (42a,b) ;
- la communication du paramètre d'évaluation à partir d'au moins un dispositif (10) dans la seconde couche (40b) aux dispositifs (10) dans au moins un des groupes (42a,b) dans la première couche (40a), pour modifier une application de la fonction d'évaluation dans ledit au moins un des groupes (42a,b).

5. Méthode selon la revendication 2, dans lequel la première couche (40a) comprend une pluralité de groupes (42a,b) de dispositifs (10), et la seconde couche (40b) comprend un groupe supplémentaire de dispositif (12), la méthode comprenant les étapes consistant à
- communiquer (35) les informations de mise à jour provenant des dispositifs (10) dans les groupes (42a,b) uniquement aux autres dispositifs (10) dans le groupe (42a,b) auxquels les dispositifs (10) appartiennent, si l'application de la fonction d'évaluation pour ce groupe (42a,b) aux informations de mise à jour et au moins une variable d'état pour ce groupe (42a,b) indique que le critère de mise à jour est satisfait pour ce groupe (42a,b) ;
- communiquer des informations dérivées des variables d'état provenant des groupes respectifs (42a,b) chacune à un respectif des dispositifs (12) dans la seconde couche (40b), ou à un sous-ensemble respectif des dispositifs (12) dans la seconde couche (40b),
- communiquer des informations de mise à jour supplémentaires entre les dispositifs (12) dans le groupe supplémentaire, pour partager des informations dérivées des variables d'état provenant des groupes respectifs (42a,b) de dispositifs (10) dans la première couche (40a).

6. Méthode selon la revendication 5, comprenant les étapes consistant à
- calculer une mise à jour de la variable d'état et/ou d'une variable d'état supplémentaire du modèle d'au moins un des groupes dans au moins un des dispositifs (12) dans le groupe supplémentaire à partir des informations de mise à jours supplémentaires communiquées entre les dispositifs (10) du groupe supplémentaire (42a,b) ;
- communiquer la mise à jour de la variable d'état et/ou d'une variable d'état supplémentaire du modèle dudit au moins un des dispositifs (12) dans le groupe supplémentaire aux dispositifs (10) dans le au moins un des groupes (42a,b) dans la première couche (40a) ;
- en réponse, mettre à jour la variable d'état et/ou d'une variable d'état supplémentaire dans les dispositifs (10) dans le au moins un des groupes (42a,b).

7. Méthode selon la revendication 1, comprenant la communication d'un paramètre d'évaluation, pour modifier une application de la fonction d'évaluation, à partir d'au moins un des dispositifs distribués aux dispositifs (10) dans le groupe (42a,b).

8. Méthode selon la revendication 7, comprenant les étapes consistant à
- déterminer des informations d'état en utilisant là au moins une variable d'état à partir d'au moins un des dispositifs (10) dans le groupe (42a,b) ;
- sélectionner le paramètre d'évaluation selon les informations d'état dans le dispositif (12) dans la seconde couche (40b).

9. Méthode selon la revendication 7, comprenant les étapes consistant à
- recevoir une indication d'utilisation prévue de la au moins une variable d'état ;
- calculer le paramètre d'évaluation en fonction de l'utilisation prévue.

10. Méthode selon la revendication 1, communiquant une mise à jour de la au moins une variable d'état et/ou d'une variable d'état supplémentaire du modèle aux dispositifs (10) dans le groupe (42a,b).

11. Méthode selon la revendication 1, comprenant les étapes consistant à
- mettre en mémoire tampon les informations de mise à jour sans les utiliser pour mettre à jour les variables d'état si l'application de la fonction d'évaluation indique que le critère de mise à jour n'est pas satisfait ;
- répéter l'étape (32) consistant à appliquer la fonction d'évaluation aux informations de mise à jour et aux variables d'état dans le dispositif (10) après une mise à jour des variables d'état ;
- mettre à jour (34) les variables d'état sur la base des informations de mise à jour, et communiquer (35) les informations de mise à jour aux autres dispositifs (10) dans le groupe (42a,b), et dans ce cas à tous les dispositifs (10) du groupe (42a,b) une répétition de l'application de la fonction d'évaluation indique que le critère de mise à jour est satisfait.

12. Méthode selon la revendication 1, dans lequel le système comprend des premier et second groupes (42a,b), chaque groupe (42a,b) ayant sa propre fonction d'évaluation, les dispositifs (10) dans chaque groupe (42a,b) mettant à jour les variables d'état sur la base des informations de mise à jour et communiquant les informations de mise à jour à tous les dispositifs (10) dans le groupe (42a,b) lorsque l'application de la fonction d'évaluation pour ce groupe (42a,b) indique que le critère de mise à jour est satisfait, au moins un des dispositifs (10) appartenant à la fois au premier et au second groupe (42a,b), ledit au moins un des dispositifs (10) maintenant des première et seconde variable d'état, pour les premier et second groupes (42a,b), respectivement,
- ledit au moins un dispositif (10) mettant à jour les variables d'état sur la base des informations de mise à jour, et communiquant les informations de mise à jour à tous les dispositifs (10) dans les premier et second groupes (42a,b), si l'application de la fonction d'évaluation aux informations de mise à jour et aux variables d'état des premier et second groupes (42a,b) indique que le critère de mise à jour est satisfait pour les premier et second groupes, respectivement.

13. Dispositif (10) destiné à être utilisé dans un groupe (42a,b) de dispositifs (10) qui maintiennent au moins une variable d'état d'un modèle commun, le dispositif (10) comprenant un capteur (20), un récepteur (26), un émetteur (28), une mémoire (24) et un processeur (22), le processeur (22) étant configuré pour
- mettre à jour (36) la au moins une variable d'état dans la mémoire en réponse à des informations de mise à jour reçues à partir d'autres dispositifs par le récepteur (26) ;
- dériver (31) des informations de mise à jour à partir du capteur (20) ;
- appliquer (32) une fonction d'évaluation aux informations de mise à jour et à la au moins une variable d'état dans le dispositif (10) ;
- mettre à jour (34) la au moins une variable d'état dans la mémoire (24) sur la base des informations de mise à jour uniquement si l'application de la fonction d'évaluation indique qu'un critère de mise à jour est satisfait ;
- amener (35) l'émetteur (28) à communiquer les informations de mise à jour aux autres dispositifs (10) dans le groupe (42a,b) uniquement si l'application de la fonction d'évaluation indique que le critère de mise à jour est satisfait et dans ce cas à tous les dispositifs (10) du groupe.

14. Dispositif selon la revendication 13, dans lequel le processeur (22) est configuré pour amener l'émetteur (28) à émettre des informations dérivées de là au moins une variable d'état à un dispositif supplémentaire (12).

15. Dispositif selon la revendication 13, dans lequel le processeur (22) est configuré pour adapter un paramètre d'évaluation sur la base d'informations reçues par le récepteur (26) et pour appliquer la fonction d'évaluation en fonction du paramètre d'évaluation.
